(19) Europäisches Patentamt
European Patent Office
Office européen des brevets

(11) Veröffentlichungsnummer : **0 052 578**
**B1**

(12) **EUROPÄISCHE PATENTSCHRIFT**

(45) Veröffentlichungstag der Patentschrift : **09.10.85**

(51) Int. Cl.⁴ : **C 09 B 29/085**// D06P1/06, D06P3/06

(21) Anmeldenummer : **81810408.5**

(22) Anmeldetag : **12.10.81**

(54) **Monoazoverbindungen.**

(30) Priorität : **16.10.80 CH 7737/80**

(43) Veröffentlichungstag der Anmeldung : **26.05.82 Patentblatt 82/21**

(45) Bekanntmachung des Hinweises auf die Patenterteilung : **09.10.85 Patentblatt 85/41**

(84) Benannte Vertragsstaaten : **CH DE FR GB LI**

(56) Entgegenhaltungen :
**FR-A- 2 284 643**
**GB-A- 1 343 543**
**GB-A- 2 005 294**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Postfach**
**CH-4002 Basel (CH)**

(72) Erfinder : **Schwander, Hansrudolf, Dr.**
**Unterm Schellenberg 189**
**CH-4125 Riehen (CH)**
Erfinder : **Furrer, Peter, Dr.**
**Brändelistalweg 26**
**CH-4103 Bottmingen (CH)**

**EP 0 052 578 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Monoazoverbindungen, Verfahren zu deren Herstellung, sowie deren Verwendung als Farbstoffe zum Färben und Bedrucken von Textilmaterialien, vor allem Wolle und Polyamid.

Die neuen Monoazoverbindungen entsprechen der Formel I

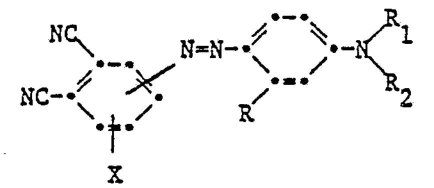

(I)

Die Substituenten X, R, $R_1$ und $R_2$ haben die folgende Bedeutung :

X Wasserstoff oder Halogen,

R Wasserstoff oder Alkyl ($C_1$-$C_4$),

$R_1$ Alkyl ($C_1$-$C_8$), Cycloalkyl oder Alkylen-($C_1$-$C_4$)- 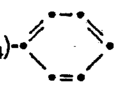

wobei der Phenylrest monosulfiert sein kann,

$R_2$ Alkyl ($C_1$-$C_4$), gegebenenfalls substituiert durch eine Sulfogruppe oder Cycloalkyl.

Bedingung für die Wahl der Substituenten ist, dass entweder der Rest $R_1$ oder der Rest $R_2$ eine Sulfogruppe enthält.

Bedeutet X ein Halogenatom so handelt es sich um das Fluor-, Chlor-, Brom- oder Jodatom, wobei das Bromatom bevorzugt ist.

R in der Bedeutung von Alkyl ($C_1$-$C_4$) stellt einen verzweigten, vorzugsweise jedoch unverzweigten Alkylrest dar, wie den Methyl-, Aethyl-, n- oder iso-Propyl- oder n-, sec.- oder tert.-Butylrest. In bevorzugten Monoazoverbindungen bedeutet R Wasserstoff, den Methyl- oder Aethylrest.

$R_1$ in der Bedeutung eines Alkylrestes mit 1 bis 8 Kohlenstoffatomen stellt sowohl einen verzweigten, als auch unverzweigten Alkylrest dar, wie den Methyl-, Aethyl-, n- und iso-Propyl, den n-, sec- oder tert.-Butyl-, n- oder iso-Pentyl-, n-Hexyl-, n-Heptyl-, n- oder iso-Octyl- oder den 2-Aethyl-hexylrest. Als Cycloalkylreste kommen solche mittlerer Ringgrösse in Frage, die durch eine oder mehrere Alkylgruppen mit bis zu 4 Kohlenstoffatomen substituiert sein können, wie z. B. der Cyclopentyl-, -hexyl- oder -heptylrest oder auch der Mono-, Di- oder Trimethylcyclohexylrest. Bei Phenylalkylenresten mit einem Alkylenteil von 1 bis 4 Kohlenstoffatomen kommt bevorzugt der Benzyl- oder β-Phenäthylrest in Frage ; dabei kann deren Phenylkern durch eine Sulfogruppe substituiert sein. In bevorzugten Monoazoverbindungen stellt der Rest $R_1$ einen Sulfobenzyl- oder β-Sulfophenäthylrest dar.

$R_2$ in der Bedeutung eines Alkylrestes mit 1 bis 4 Kohlenstoffatomen stellt z. B. einen verzweigten oder vorzugsweise unverzweigten Alkylrest dar, wie den Methyl-, Aethyl-, n- und iso-Propyl- oder n-, sec- oder tert.-Butylrest. Dabei können die genannten Alkylreste durch eine Sulfogruppe substituiert sein. in bevorzugten Monoazoverbindungen bedeutet $R_2$ Methyl oder Aethyl. Ferner hat $R_2$ die Bedeutung von Cycloalkyl, wobei auch hier wiederum Reste mittlerer Ringgrösse gemeint sind, die durch eine oder mehrere Alkylgruppen mit bis zu 4 Kohlenstoffatomen substituiert sein können, wie z. B. der Cyclopentyl-, -hexyl- oder -heptylrest oder auch der Mono-, Di- oder Trimethylcyclohexylrest.

Bei der Wahl der Substituenten $R_1$ und $R_2$ gilt, dass einer dieser Substituenten eine Sulfogruppe enthalten muss. Das heisst, dass der Sulfoalkyl ($C_1$-$C_4$) rest $R_2$ mit folgenden Resten $R_1$ kombiniert werden kann : Alkyl ($C_1$-$C_8$), Cycloalkyl oder Alkylen-($C_1$-$C_4$)- 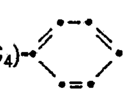

In einer bevorzugten Kombination der Substituenten $R_1$ und $R_2$ haben diese die folgende Bedeutung :

$R_1$ Alkylen-($C_1$-$C_4$)— 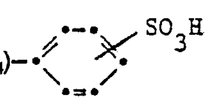

und $R_2$ Alkyl ($C_1$-$C_4$) oder Cycloalkyl.

Der Alkylenteil im Rest $R_1$ hat dabei vorzugsweise die Bedeutung von Methylen oder Aethylen und Als Alkyl- bzw. Cycloalkylreste $R_2$ kommen insbesondere der Methyl-, Aethyl- und Cyclohexylrest in Frage.

Die Azobrücke kann sich in Bezug auf die beiden Cyano-Substituenten der Diazokomponente sowohl

in ortho- als auch para-Stellung zu diesen befinden. Bevorzugt ist die Azobrücke in para-Stellung zu einem der beiden CN-Reste.

Bevorzugte Monoazoverbindungen entsprechen der Formel Ia

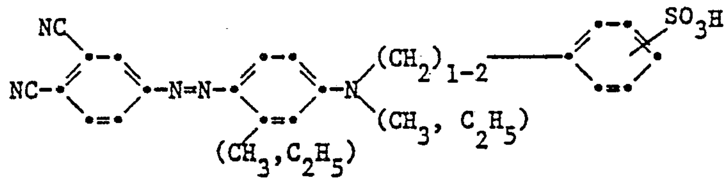

(Ia).

Insbesondere bevorzugt sind die Monoazoverbindungen der Formel Ib, Ic und Id

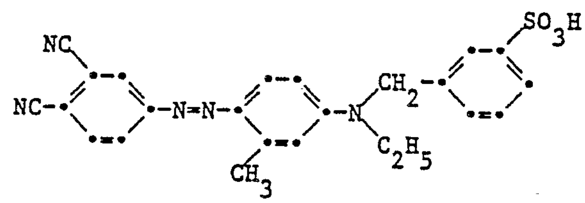

(Ib),

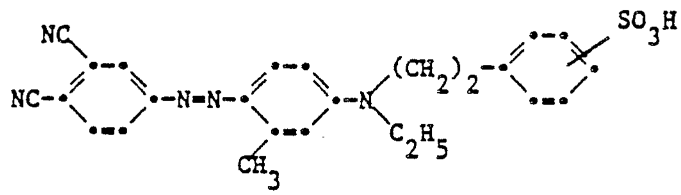

(Ic)

und

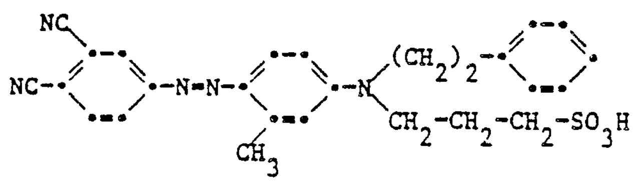

(Id).

Die erfindungsgemässen Monoazoverbindungen der Formel I können nach an sich bekannter Art und Weise hergestellt werden, beispielsweise derart, dass man ein Amin der Formel II

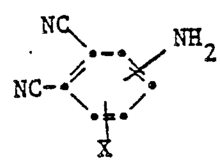

(II)

diazotiert und mit einer Kupplungskomponente der Formel III

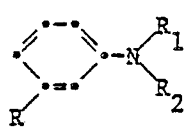

(III),

worin die Symbole X, R, $R_1$ und $R_2$ die angegebene Bedeutung haben, kuppelt.

Die Amine der Formel II, in denen X Wasserstoff bedeutet, sind bekannt (Formel IIa) und werden nach bekannten Methoden hergestellt. Die Amine der Formel II, in denen X Halogen bedeutet, sind neu. Sie entsprechen der Formel IIb,

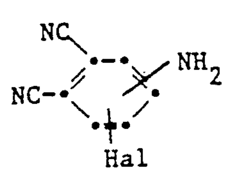

(IIb)

worin Hal ein Halogenatom bedeutet, Man erhält diese Verbindungen IIb nach an sich bekannten

Methoden, so z. B. die Bromderivate, indem man Amine der Formel IIa

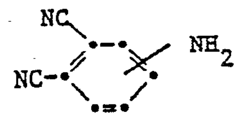

(IIa)

mit elementarem Brom bromiert. Die neuen Amine der Formel IIb können vor allem verwendet werden als Diazokomponenten zur Herstellung von Azoverbindungen.

Ein bevorzugtes Verfahren ist dadurch gekennzeichnet, dass man eine Verbindung der Formel II, worin X Wasserstoff oder Brom bedeutet, diazotiert und auf eine Kupplungskomponente der Formel III, worin R, $R_1$ und $R_2$ die unter Formel III angegebenen Bedeutungen haben, kuppelt.

Vorzugsweise verwendet man eine Kupplungskomponente der Formel III worin

$R_1$ Alkylen-($C_1$-$C_4$)- 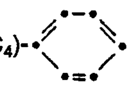

das im Phenylrest durch eine Sulfogruppe substituiert sein kann und $R_2$ Alkyl ($C_1$-$C_4$), das durch eine Sulfogruppe substituiert sein kann, oder Cycloalkyl bedeutet, und worin der Rest $R_1$ oder der Rest $R_2$ eine Sulfogruppe enthält und R die unter Formel III angegebene Bedeutung hat.

Eine ebenfalls bevorzugte Verfahrensweise ist dadurch gekennzeichnet, dass man eine Kupplungskomponente der Formel III verwendet, worin $R_1$ Alkyl ($C_1$-$C_8$) oder Cycloalkyl und $R_2$ Sulfoalkyl ($C_1$-$C_4$) bedeutet und R die unter Formel III angegebene Bedeutung hat.

Insbesondere verwendet man Kupplungskomponenten der Formel III, worin R Wasserstoff, Methyl oder Aethyl bedeutet.

In den bevorzugten Diazokomponenten der Formel II ist die Aminofunktion in para-Stellung zu einem der beiden Cyanoreste gebunden.

Nach einer besonders bevorzugten Verfahrensweise verwendet man eine Kupplungskomponente der Formel III, worin

R Wasserstoff, Methyl oder Aethyl, $R_1$ Alkylen- 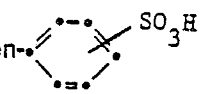 ,

mit einem Alkylenteil von $C_1$-$C_2$ und $R_2$ Alkyl ($C_2$-$C_4$) oder Cyclohexyl bedeutet, oder worin

$R_1$ Alkylen- 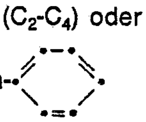

mit einem Alkylenteil von $C_1$-$C_2$ und $R_2$ Sulfoalkyl mit Alkyl ($C_2$-$C_3$) bedeutet.

Eine ebenfalls besonders bevorzugte Verfahrensweise ist dadurch gekennzeichnet, dass man eine Kupplungskomponente der Formel III verwendet, worin R Wasserstoff, Methyl oder Aethyl, $R_1$ Alkyl ($C_2$-$C_8$) oder Cyclohexyl und $R_2$ Sulfoalkyl ($C_2$-$C_3$) bedeutet.

Besonders wertvolle Monoazoverbindungen werden hergestellt, indem man 3,4-Dicyananilin diazotiert und auf N-Aethyl-N-(3'-sulfobenzyl)-3-methylanilin, N-Aethyl-N-sulfophenäthyl-3'-methylanilin oder N-γ-Sulfopropyl-N-phenäthyl-3-methylanilin kuppelt.

Als Amine der Formel II seien z. B. genannt:

3.4-Dicyananilin,
2.3-Dicyananilin und
bromiertes 3.4-Dicyananilin.

Die Kupplungskomponenten der Formel III sind bekannt und werden nach bekannten Methoden hergestellt. Von der Vielzahl der möglichen Anilinderivate, die als Kupplungskomponenten in Frage kommen, seien im folgenden beispielsweise genannt:

N-Sulfobenzyl-N-äthyl-3-methylanilin
N-Sulfobenzyl-N-äthylanilin
N-Sulfobenzyl-N-n-propyl-3-methylanilin
N-Sulfobenzyl-N-n-butyl-3-methylanilin
N-Sulfobenzyl-N-n-butylanilin
N-Sulfobenzyl-N-äthyl-3-äthylanilin
N-β-Sulfophenäthyl-N-äthylanilin
N-β-Sulfophenäthyl-N-äthyl-3-methylanilin
N-Sulfobenzyl-N-cyclohexyl-3-methylanilin
N-Benzyl-N-β-sulfoäthylanilin
N-Benzyl-N-β-sulfoäthyl-3-methylanilin

N-Benzyl-N-γ-sulfopropylanilin
N-Benzyl-N-γ-sulfopropyl-3-methylanilin
N-Cyclohexyl-N-β-sulfoäthylanilin
N-Cyclohexyl-N-β-sulfoäthyl-3-methylanilin
N-Cyclohexyl-N-γ-sulfopropylanilin
N-Cyclohexyl-N-γ-sulfopropyl-3-methylanilin
N-(2-äthyl-hexyl)-N-β-sulfoäthyl-3-methylanilin
N-Phenäthyl-N-β-sulfoäthylanilin
N-Phenäthyl-N-β-sulfoäthyl-3-methylanilin
N-Phenäthyl-N-γ-sulfopropylanilin
N-Phenäthyl-N-γ-sulfopropyl-3-methylanilin
N-(3'-Sulfobenzyl)-N-äthyl-3-methylanilin.

Sowohl die Diazotierung der Verbindung II, als auch die Kupplungsreaktion der diazotierten Verbindung II mit der Verbindung III wird nach an sich bekannten Methoden durchgeführt [siehe z. B. K.H. SCHÜNDEHÜTTE in Houben-Weyl, Bd. 10/3, S. 213-465 (1965)].

Verwendung finden die neuen Monoazoverbindungen der Formel I vor allem als Farbstoffe zum Färben und Bedrucken von Textilmaterialien, welche mit anionischen Farbstoffen färbbar sind, vor allem Polyamidmaterialien und Wolle. Das Färben kann nach beliebigen für das entsprechende Substrat geeigneten, kontinuierlichen oder diskontinuierlichen Methoden (z. B. Auszieh-, Klotz- oder Druckverfahren) erfolgen. Die erfindungsgemässen Monoazofarbstoffe zeichnen sich durch eine hohe Migrationsfähigkeit und gutes Decken der Streifigkeit aus. Weiterhin zeigen sie gute Ergebnisse in der Kombinationsfärbung mit Monosulfosäurefarbstoffen, welche bei pH 5 gefärbt werden. Die mit den Farbstoffen der Formel I auf Polyamid und Wolle erhaltenen Ausfärbungen weisen gute Allgemeinechtheiten auf, wie vor allem eine gute Nassechtheit, gute Lichtechtheit und gute Formaldehydbeständigkeit.

Die zu färbenden Textilmaterialien können dabei in den verschiedensten Verarbeitungsformen wie Gewirke, Gewebe, Garne und Fasern sowie fertigen Artikeln, wie Hemden vorliegen.

Die mit dem Farbstoff der Formel Ia auf natürlichen und synthetischen Polyamid-Materialien erzeugten roten Färbungen sind gut licht- und nassecht ; dabei zeigen diese Farbstoffe ein gutes Migrieren, hohen Aufbau, einen guten Ausziehgrad und gutes Decken der Streifigkeit.

Aus der FR-A 22 84 643 ist ein ähnlicher Monoazofarbstoff bekannt, der jedoch nicht alle guten Eigenschaften der erfindungsgemässen Monoazofarbstoffe aufweist.

In den nachfolgenden Beispielen bedeuten die Teile, sofern nichts anderes angegeben wird, Gewichtsteile, die Prozente Gewichtsprozente und die Temperaturen sind in Celsiusgraden angegeben. Sie sollen die Erfindung erläutern, ohne sie jedoch in irgendeiner Form zu beschränken.

Beispiel 1

Zu einem Gemisch bestehend aus 2,85 g 3,4-Dicyananilin, 30 ml Isopropanol und 6 ml 36 %iger Salzsäure lässt man bei einer Temperatur von 0-2° langsam 5 ml 4n-Nitritlösung zutropfen. Man rührt noch 1 Stunde bei 0-2° nach, gibt dann 0,4 g Harnstoff zu und rührt nochmals 15 Minuten bei derselben Temperatur. Hierauf gibt man dieses Gemisch zu einer Lösung bestehend aus 2/100 Mol der Verbindung der Formel

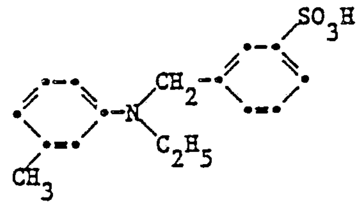

in Form ihres Natriumsalzes, gelöst in 100 ml Wasser und auf 0-2° gekühlt. Durch Zugabe von Ammoniumacetat wird der pH-Wert auf ca. 3 eingestellt. Nach beendeter Kupplung stellt man auf pH 2,5 und isoliert den gebildeten Farbstoff durch Filtration. Anschliessend schlämmt man das Nutschgut in 100 ml Wasser an und bringt durch Zugabe von Natronlauge den pH-Wert auf 7. Der in Form seines Natriumsalzes ausgefällte Farbstoff der Formel

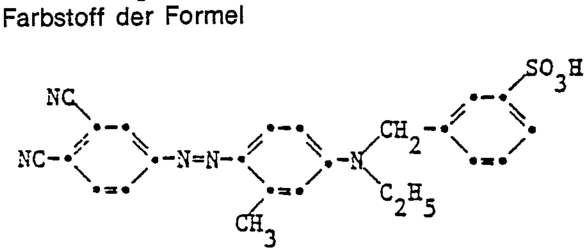

wird abfiltriert und im Vakuum bei 70° getrocknet. Man erhält den Farbstoff als rotes Pulver, welches sich in Wasser mit roter Farbe löst.

Die mit diesem Farbstoff auf Polyamid bei pH 5 erzeugten roten Färbungen sind gut licht- und nassecht. Der Farbstoff zeigt ein gutes Migrieren, hohen Aufbau, einen guten Ausziehgrad und gutes Decken der Streifigkeit sowie eine gute Formaldehydbeständigkeit.

Verwendet man anstelle von 3,4-Dicyananilin das 2,3-Dicyananilin, so erhält man bei gleichem Vorgehen einen Farbstoff mit ähnlich guten Eigenschaften.

Verwendet man bei sonst gleichem Vorgehen anstelle der oben aufgeführten Kupplungskomponente äquivalente Mengen, der in der folgenden Tabelle 1 aufgeführten Kupplungskomponenten, so erhält man Farbstoffe der Formel

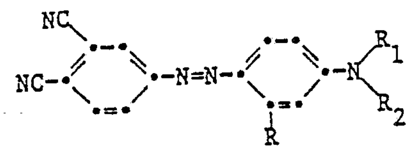

welche Polyamid aus saurem Bad in roten Tönen mit ähnlich guten Echtheitseigenschaften färben.

Tabelle 1

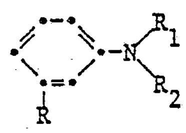

| Nr. | R | $R_1$ | $R_2$ | Nuance auf Polyamid |
|---|---|---|---|---|
| 2 | H | 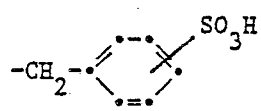 | $-C_2H_5$ | rot |
| 3 | $-CH_3$ | 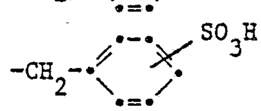 | $-C_3H_7$-n | rot |
| 4 | $-CH_3$ | 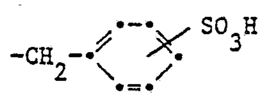 | $-C_4H_9$-n | rot |
| 5 | $-C_2H_5$ | 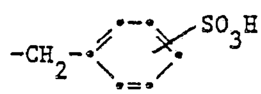 | $-C_2H_5$ | rot |
| 6 | H | 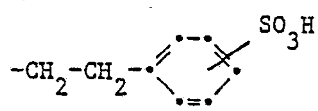 | $-C_2H_5$ | rot |
| 7 | $-CH_3$ | 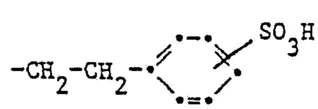 | $-C_2H_5$ | rot |
| 8 | $-CH_3$ | 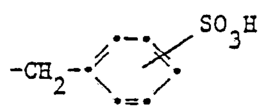 | 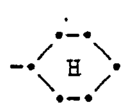 | rot |
| 9 | H | 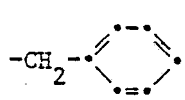 | $-CH_2-CH_2-SO_3H$ | rot |

(Fortsetzung)

| Nr. | R | $R_1$ | $R_2$ | Nuance auf Polyamid |
|---|---|---|---|---|
| 10 | $-CH_3$ | 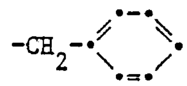 | $-CH_2-CH_2-SO_3H$ | rot |
| 11 | H | 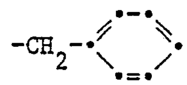 | $-CH_2-CH_2-CH_2-SO_3H$ | rot |
| 12 | $-CH_3$ | 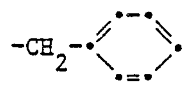 | $-CH_2-CH_2-CH_2-SO_3H$ | rot |
| 13 | H | 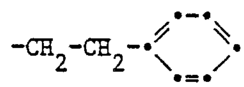 | $-CH_2-CH_2-SO_3H$ | rot |
| 14 | $-CH_3$ | 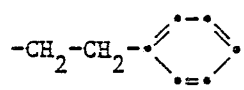 | $-CH_2-CH_2-SO_3H$ | rot |
| 15 | H | 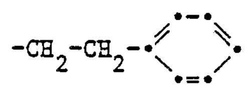 | $-CH_2-CH_2-CH_2-SO_3H$ | rot |
| 16 | $-CH_3$ | 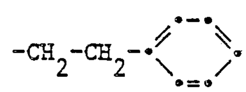 | $-CH_2-CH_2-CH_2-SO_3H$ | rot |
| 17 | H | 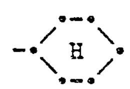 | $-CH_2-CH_2-SO_3H$ | rot |
| 18 | $-CH_3$ | 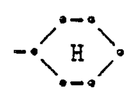 | $-CH_2-CH_2-SO_3H$ | rot |
| 19 | H | 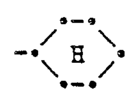 | $-CH_2-CH_2-CH_2-SO_3H$ | rot |
| 20 | $-CH_3$ | 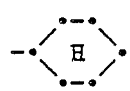 | $-CH_2-CH_2-CH_2-SO_3H$ | rot |
| 21 | $-CH_3$ | 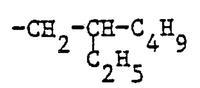 | $-CH_2-CH_2-SO_3H$ | rot |

Beispiel 22

Zu einem Gemisch, bestehend aus 5,7 g 3,4-Dicyananilin, 3,6 g Natriumacetat und 25 ml Essigsäure lässt man bei Raumtemperatur langsam eine Lösung von 6,7 g Brom in 5 ml Essigsäure zutropfen. Nach beendeter Zugabe des Broms rührt man noch weiter bei Raumtemperatur, bis dass sich im Dünnschichtchromatogramm kein Edukt mehr nachweisen lässt. Man entfernt hierauf die Essigsäure am Rotationsverdampfer im Vakuum. Den Rückstand behandelt man mit warmem Wasser, isoliert das Produkt durch Filtration und wäscht mit Wasser gut nach. Nach Trocknung im Vakuum bei 70° erhält man das Brom-3,4-dicyananilin als graues in Dimethylformamid praktisch farblos lösliches Produkt. Aufgrund des Dünnschichtchromatogramms handelt es sich bei dem Produkt um ein Isomeren-Gemisch.

$R_f$-Werte der beiden Hauptprodukte : 0,43 ; 0,55 (ermittelt auf Kieselgel-Fertigplatten 60F-254, MERCK Darmstadt ; Laufmittel : Toluol/Aethanol 4 : 1).

Beispiel 23

Zu einem Gemisch, bestehend aus 4,45 g Brom-3,4-dicyananilin, 30 ml Dimethylformamid und 6 ml 36 %ige Salzsäure, lässt man bei einer Temperatur von 0-2° langsam 5 ml 4n-Nitritlösung zutropfen. Man rührt noch eine Stunde bei 0-2° nach, gibt dann 0,4 g Harnstoff zu und lässt noch weitere 15 Minuten rühren.

Man gibt hierauf dieses Gemisch zu einer Lösung von 2/100 Mol der Verbindung der Formel

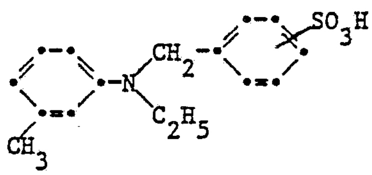

die in Form ihres Natriumsalzes vorliegt, gelöst in 100 ml Wasser und auf 0-2° gekühlt. Man stellt den pH-Wert mit Ammoniumacetat auf ca. 3 ein. Nach beendeter Kupplung erniedrigt man den pH-Wert weiter auf 2,5 und isoliert den gebildeten Farbstoff durch Filtration.

Anschliessend wird der Farbstoff in 100 ml Wasser aufgeschlämmt und der pH-Wert der Aufschlämmung durch Zugabe von Natronlauge auf 7 eingestellt. Der in Form seines Natriumsalzes ausgefällte Farbstoff der Formel

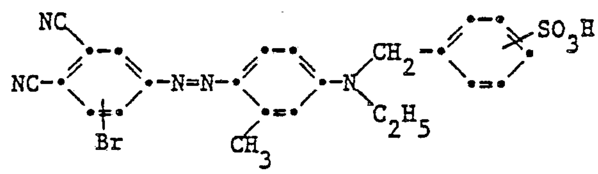

wird abfiltriert und im Vakuum bei 70° getrocknet. Der Farbstoff fällt so als rotes Pulver an, welches sich in Wasser mit roter Farbe löst.

Die mit diesem Farbstoff auf Polyamid erhältlichen blaustichig-roten Färbungen sind gut licht- und nassecht.

Variiert man bei sonst gleichem Vorgehen die Kupplungskomponente, so erhält man die in der folgenden Tabelle 2 aufgeführten Farbstoffe, die auf Polyamid ausgefärbt, Färbungen mit guten Echtheitseigenschaften ergeben.

Tabelle 2

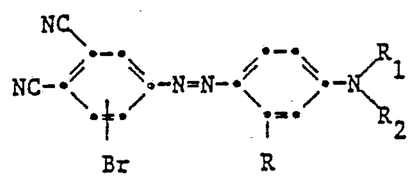

| Nr. | R | $R_1$ | $R_2$ | Nuance auf Polyamid |
|---|---|---|---|---|
| 24 | H | 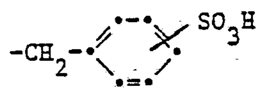 | $-C_2H_5$ | rot |
| 25 | H | 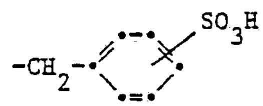 | $-C_4H_9$-n | rot |
| 26 | $-CH_3$ | 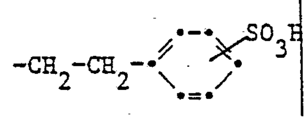 | $-C_2H_5$ | blaustichig rot |

(Fortsetzung)

| Nr. | R | $R_1$ | $R_2$ | Nuance auf Polyamid |
|---|---|---|---|---|
| 27 | $-CH_3$ | $-CH_2-$ 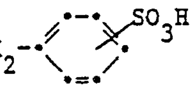 | 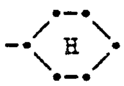 | blaustichig rot |
| 28 | $-CH_3$ | $-CH_2-$ 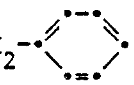 | $-CH_2-CH_2-SO_3H$ | blaustichig rot |
| 29 | $-CH_3$ | $-CH_2-$ 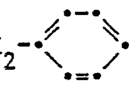 | $-CH_2-CH_2-CH_2-SO_3H$ | blaustichig rot |
| 30 | H | $-CH_2-CH_2-$ 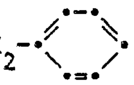 | $-CH_2-CH_2-SO_3H$ | rot |
| 31 | $-CH_3$ | $-CH_2-CH_2-$ 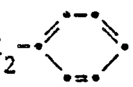 | $-CH_2-CH_2-SO_3H$ | rot |
| 32 | H | $-CH_2-CH_2-$ 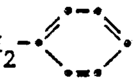 | $-CH_2-CH_2-CH_2-SO_3H$ | rot |
| 33 | $-CH_3$ | $-CH_2-CH_2-$ 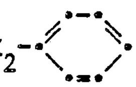 | $-CH_2-CH_2-CH_2-SO_3H$ | rot |
| 34 | $-CH_3$ | 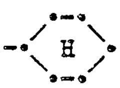 | $-CH_2-CH_2-SO_3H$ | blaustichig rot |
| 35 | $-CH_3$ | 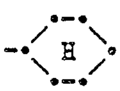 | $-CH_2-CH_2-CH_2-SO_3H$ | blaustichig rot |

Beispiel 36

Man bereitet ein Färbebad aus 4000 Teilen Wasser, 4 Teilen Ammoniumacetat, 2 Teilen des Farbstoffes gemäss Beispiel 1 und sowiel Essigsäure, dass der pH-Wert des Bades 6 beträgt. In das erhaltene Färbebad geht man mit 100 Teilen eines synthetischen Polyamidtricots ein, erhitzt es innerhalb einer halben Stunde zum Kochen und färbt 45 Minuten bei 100°. Man erhält eine streifenfreie rote Färbung mit guten Nassechtheiten.

Beispiel 37

100 Teile Wollstrickgarn werden bei 50° in ein Färbebad eingeführt, das auf 4000 Teile Wasser 2 Teile des Farbstoffes des Beispiels 1, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine rote Wollfärbung mit guten Echtheitseigenschaften.

**Patentansprüche**

1. Monoazoverbindungen der Formel I

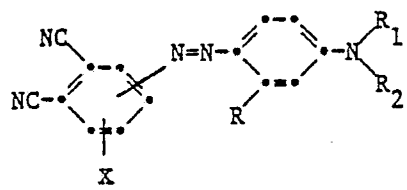

(I)

worin bedeuten :

X Wasserstoff oder Halogen,

R Wasserstoff oder Alkyl ($C_1$-$C_4$),

$R_1$ Alkyl ($C_1$-$C_8$), Cycloalkyl oder Alkylen-($C_1$-$C_4$)- 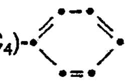

worin der Phenylrest monosulfiert sein kann, und

$R_2$ Alkyl ($C_1$-$C_4$), gegebenenfalls substituiert durch $—SO_3H$, oder Cycloalkyl, mit der Bedingung, dass $R_1$ oder $R_2$ eine Sulfogruppe enthält.

2. Monoazoverbindungen gemäss Anspruch 1, dadurch gekennzeichnet, dass X Wasserstoff oder Brom bedeutet und R, $R_1$ und $R_2$ die in Anspruch 1 angegebenen Bedeutungen haben.

3. Monoazoverbindungen gemäss Anspruch 2, dadurch gekennzeichnet, dass

$R_1$ Alkylen-($C_1$-$C_4$)- 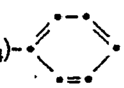

das im Phenylrest durch eine Sulfogruppe substituiert sein kann und $R_2$ Alkyl ($C_1$-$C_4$), das durch eine Sulfogruppe substituiert sein kann, oder Cycloalkyl bedeutet, und worin der Rest $R_1$ oder der Rest $R_2$ eine Sulfogruppe enthält und R und X die in Anspruch 2 angegebenen Bedeutungen haben.

4. Monoazoverbindungen gemäss Anspruch 2, dadurch gekennzeichnet, dass $R_1$ Alkyl ($C_1$-$C_8$) oder Cycloalkyl und $R_2$ Sulfoalkyl ($C_1$-$C_4$) bedeutet und R und X die in Anspruch 2 angegebenen Bedeutungen haben.

5. Monoazoverbindungen gemäss Anspruch 3, dadurch gekennzeichnet, dass R Wasserstoff, Methyl oder Aethyl bedeutet und $R_1$, $R_2$ und X die in Anspruch 3 angegebenen Bedeutungen haben.

6. Monoazoverbindungen gemäss Anspruch 1, dadurch gekennzeichnet, dass die Azobrücke in para-Stellung zu einem der beiden CN-Reste gebunden ist.

7. Monoazoverbindungen gemäss Anspruch 5, dadurch gekennzeichnet, dass

$R_1$ Alkylen- 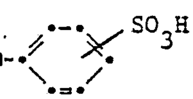

mit einem Alkylenteil von $C_1$-$C_2$ und $R_2$ Alkyl ($C_2$-$C_4$) oder Cyclohexyl bedeutet.

8. Monoazoverbindungen gemäss Anspruch 5, dadurch gekennzeichnet, dass

$R_1$ Alkylen- 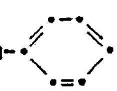

mit einem Alkylenteil von $C_1$-$C_2$ und $R_2$ Sulfoalkyl mit Alkyl ($C_2$-$C_3$) bedeutet.

9. Monoazoverbindungen gemäss Anspruch 4, dadurch gekennzeichnet, dass R Wasserstoff, $—CH_3$ oder $—C_2H_5$, $R_1$ Alkyl ($C_2$-$C_8$) oder Cyclohexyl und $R_2$ Sulfoalkyl ($C_2$-$C_3$) bedeutet.

10. Die Monoazoverbindung gemäss Anspruch 7 der Formel

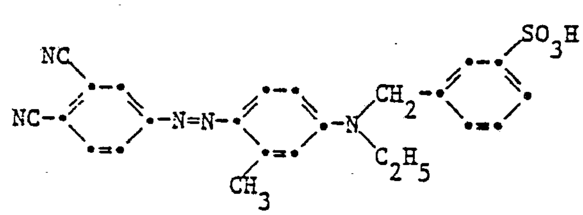

11. Die Monoazoverbindung gemäss Anspruch 7 der Formel

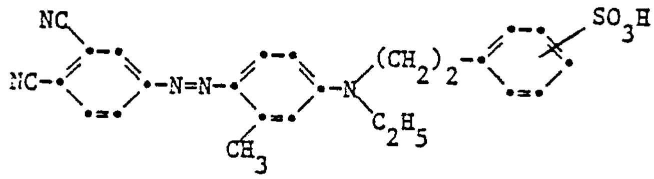

12. Die Monoazoverbindung gemäss Anspruch 8 der Formel

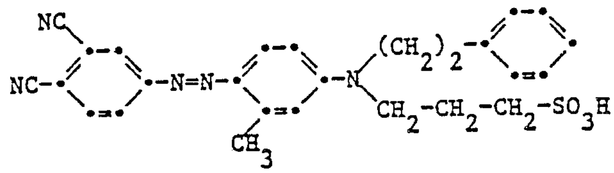

13. Verfahren zur Herstellung von Monoazoverbindungen der Formel I gemäss Anspruch 1, dadurch gekennzeichnet, dass man eine Verbindung der Formel II

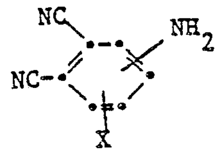

(II)

diazotiert und mit einer Kupplungskomponente der Formel III

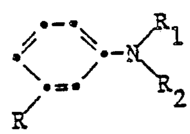

(III),

in welchen Formeln II und III die Symbole X, R, $R_1$ und $R_2$ die unter Formel I angegebene Bedeutung haben, kuppelt, wobei die Ausgangsverbindung III so gewählt wird, dass einer der Reste $R_1$ oder $R_2$ eine Sulfogruppe enthält.

14. Verfahren gemäss Anspruch 13, dadurch gekennzeichnet, dass man eine Verbindung der Formel II, worin X Wasserstoff oder Brom bedeutet, diazotiert und auf eine Kupplungskomponente der Formel III, worin R, $R_1$ und $R_2$ die in Anspruch 13 angegebenen Bedeutungen haben, kuppelt.

15. Verfahren gemäss Anspruch 14, dadurch gekennzeichnet, dass man eine Kupplungskomponente der Formel III verwendet, worin

$R_1$ Alkylen-($C_1$-$C_4$)- 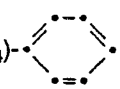

das im Phenylrest durch eine Sulfogruppe substituiert sein kann und $R_2$ Alkyl ($C_1$-$C_4$), das durch eine Sulfogruppe substituiert sein kann, oder Cycloalkyl bedeutet, und worin der Rest $R_1$ oder der Rest $R_2$ eine Sulfogruppe enthält und R die in Anspruch 14 angegebene Bedeutung hat.

16. Verfahren gemäss Anspruch 14, dadurch gekennzeichnet, dass man eine Kupplungskomponente der Formel III verwendet, worin $R_1$ Alkyl ($C_1$-$C_8$) oder Cycloalkyl und $R_2$ Sulfoalkyl ($C_1$-$C_4$) bedeutet und R die in Anspruch 14 angegebene Bedeutung hat.

17. Verfahren gemäss Anspruch 15, dadurch gekennzeichnet, dass man eine Kupplungskomponente der Formel III verwendet, worin R Wasserstoff, Methyl oder Aethyl bedeutet und $R_1$ und $R_2$ die in Anspruch 15 angegebenen Bedeutungen haben.

18. Verfahren gemäss Anspruch 13, dadurch gekennzeichnet, dass man ein Amin der Formel II verwendet, wobei sich die Aminofunktion in para-Stellung zu einem der beiden Cyanoreste befindet.

19. Verfahren gemäss Anspruch 17, dadurch gekennzeichnet, dass man eine Kupplungskomponente der Formel III verwendet, worin

$R_1$ Alkylen– 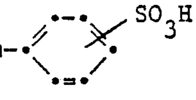

mit einem Alkylenteil von $C_1$-$C_2$ und $R_2$ Alkyl ($C_2$-$C_4$) oder Cyclohexyl bedeutet.

20. Verfahren gemäss Anspruch 17, dadurch gekennzeichnet, dass man eine Kupplungskomponente der Formel III verwendet, worin

$R_1$ Alkylen- 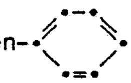

mit einem Alkylenteil von $C_1$-$C_2$ und $R_2$ Sulfoalkyl mit Alkyl ($C_2$-$C_3$) bedeutet.

21. Verfahren gemäss Anspruch 16, dadurch gekennzeichnet, dass man eine Kupplungskomponente der Formel III verwendet, worin R Wasserstoff, Methyl oder Aethyl, $R_1$ Alkyl ($C_2$-$C_8$) oder Cyclohexyl und $R_2$ Sulfoalkyl ($C_2$-$C_3$) bedeutet.

22. Verfahren gemäss Anspruch 14, dadurch gekennzeichnet, dass man 3,4-Dicyananilin diazotiert und auf N-Aethyl-N-(3'-sulfobenzyl)-3-methyl-anilin, N-Aethyl-N-sulfophenäthyl-3-methylanilin oder N-γ-Sulfopropyl-N-phenäthyl-3-methylanilin kuppelt.

23. Verwendung der Monoazoverbindungen gemäss den Ansprüchen 1 bis 12 oder der gemäss den Ansprüchen 13 bis 22 erhaltenen Monoazoverbindungen als saure Farbstoffe zum Färben und Bedrucken von natürlichen und synthetischen Textilmaterialien.

24. Verwendung gemäss Anspruch 23 zum Färben und Bedrucken von Polyamid- und Wollmaterialien.

25. Die mittels den Monoazoverbindungen der Formel I gemäss Anspruch 1 gefärbten und bedruckten natürlichen und synthetischen Textilmaterialien.

**Claims**

1. A monoazo compound of the formula I

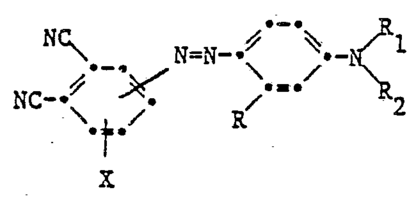

(I)

wherein

X is hydrogen or halogen,

R is hydrogen or $C_1$-$C_4$ alkyl,

$R_1$ is $C_1$-$C_8$ alkyl, cycloalkyl or $C_1$-$C_4$ alkylene- 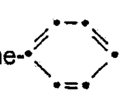

wherein the phenyl radical may be monosulfonated, and

$R_2$ is $C_1$-$C_4$ alkyl which is unsubstituted or substituted by a sulfo group or is cycloalkyl, with the proviso that either $R_1$ or $R_2$ contains a sulfo group.

2. A monoazo compound according to claim 1, wherein X is hydrogen or bromine, and R, $R_1$ and $R_2$ are as defined in claim 1.

3. A monoazo compound according to claim 2, wherein

$R_1$ is $C_1$-$C_4$ alkylene- 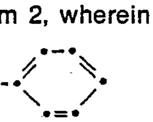

which may be substituted in the phenyl nucleus by a sulfo group, and $R_2$ is $C_1$-$C_4$ alkyl which may be substituted by a sulfo group, or is cycloalkyl, and wherein $R_1$ or $R_2$ contains a sulfo group, and R and X are as defined in claim 2.

4. A monoazo compound according to claim 2, wherein $R_1$ is $C_1$-$C_8$ alkyl or cycloalkyl, $R_2$ is $C_1$-$C_4$ sulfoalkyl, and R and X are as defined in claim 2.

5. A monoazo compound according to claim 3, wherein R is hydrogen, methyl or ethyl, and $R_1$, $R_2$ and X are as defined in claim 3.

6. A monoazo compound according to claim 1, wherein the azo bridge is bound in the para-position to one of the two cyano radicals.

7. A monoazo compound according to claim 5, wherein

$R_1$ is alkylene- 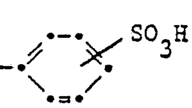

the alkylene moiety of which contains 1 to 2 carbon atoms, and $R_2$ is $C_2$-$C_4$ alkyl or cyclohexyl.

8. A monoazo compound according to claim 5, wherein

$R_1$ is alkylene- 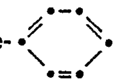

the alkylene moiety of which contains 1 to 2 carbon atoms, and $R_2$ is $C_2$-$C_3$ sulfoalkyl.

9. A monoazo compound according to claim 4, wherein R is hydrogen, $-CH_3$ or $-C_2H_5$, $R_1$ is $C_2$-$C_8$ alkyl or cyclohexyl, and $R_2$ is $C_2$-$C_3$-sulfoalkyl.

10. A monoazo compound according to claim 7 of the formula

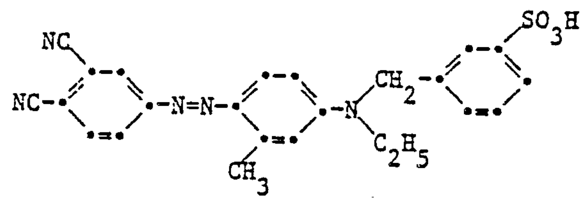

11. A monoazo compound according to claim 7 of the formula

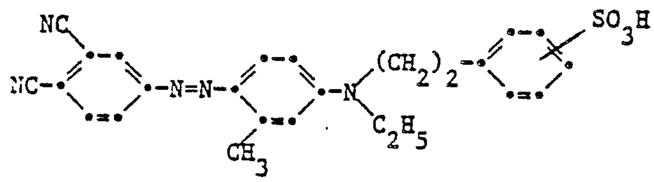

12. A monoazo compound according to claim 8 of the formula

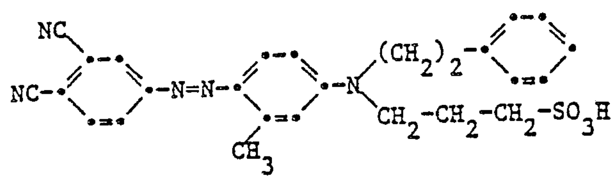

13. A process for the preparation of a monoazo compound of the formula I according to claim 1, which process comprises diazotising a compound of the formula II

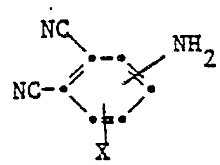

(II)

and coupling the diazotised compound to a coupling component of the formula III

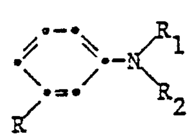

(III),

in which formulae II and III the symbols X, R, $R_1$ and $R_2$ are as defined for formula I, the starting compound of the formula III being chosen such that one of $R_1$ or $R_2$ contains a sulfo group.

14. A process according to claim 13, which comprises diazotising a compound of the formula II, wherein X is hydrogen or bromine, and coupling the diazotised compound to a coupling component of the formula III, wherein R, $R_1$ and $R_2$ are as defined in claim 13.

15. A process according to claim 14, which comprises the use of a coupling component of the formula III, wherein

$R_1$ is $C_1$-$C_4$ alkylene- 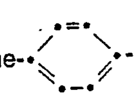

which may be substituted in the phenyl nucleus by a sulfo group, and $R_2$ is $C_1$-$C_4$ alkyl which may be substituted by a sulfo group, or is cycloalkyl, and wherein $R_1$ or $R_2$ contains a sulfo group and R is as defined in claim 14.

16. A process according to claim 14, which comprises the use of a coupling component of the formula III, wherein $R_1$ is $C_1$-$C_8$ alkyl cycloalkyl, $R_2$ is $C_1$-$C_4$ sulfoalkyl, and R is as defined in claim 14.

17. A process according to claim 15 which comprises the use of a coupling component of the formula III, wherein R is hydrogen, methyl or ethyl, and $R_1$ and $R_2$ are as defined in claim 15.

18. A process according to claim 13 which comprises the use of an amine of the formula II, wherein the amino function is in the para-position to one of the two cyano radicals.

19. A process according to claim 17 which comprises the use of a coupling component of the formula III, wherein

$R_1$ is alkylene- 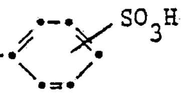

the alkylene moiety of which contains 1 to 2 carbon atoms, and $R_2$ is $C_2$-$C_4$ alkyl or cyclohexyl.

20. A process according to claim 17 which comprises the use of a coupling component of the formula III, wherein

$R_1$ is alkylene- 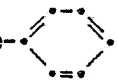

the alkylene moiety of which contains 1 to 2 carbon atoms, and $R_2$ is $C_2$-$C_3$ sulfoalkyl.

21. A process according to claim 16 which comprises the use of a coupling component of the formula III, wherein R is hydrogen, methyl or ethyl, $R_1$ is $C_2$-$C_8$ alkyl or cyclohexyl, and $R_2$ is $C_2$-$C_3$ sulfoalkyl.

22. A process according to claim 14 which comprises diazotising 3,4-dicyanoaniline and coupling the diazotised compound to N-ethyl-N-(3'-sulfobenzyl)-3-methylaniline, N-ethyl-N-sulfophenethyl-3-methylaniline or N-γ-sulfopropyl-N-phenethyl-3-methylaniline.

23. A method of dyeing or printing natural and synthetic textile material, which comprises the use of a monoazo dye according to any one of claims 1 to 12, or obtained according to any one of claims 13 to 22, as acid dye for dyeing or printing natural and synthetic textile material.

24. A method according to claim 23, wherein the material to be dyed or printed is polyamide and wool.

25. The natural and synthetic textile material dyed or printed with a monoazo dye of the formula I according to claim 1.

**Revendications**

1. Composés monoazoïques de formule I

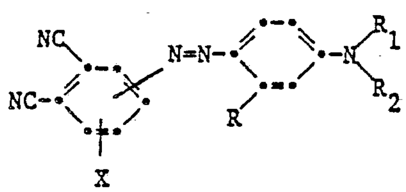

(I)

dans laquelle

X est un atome d'hydrogène ou d'halogène,

R est un atome d'hydrogène ou un reste alkyle en ($C_1$-$C_4$),

$R_1$ est un reste alkyle en ($C_1$-$C_8$), cycloalkyle ou alkylène-($C_1$-$C_4$)- 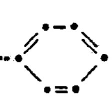

où le reste phényle peut être monosulfoné, et

$R_2$ est un reste alkyle en $C_1$-$C_4$ éventuellement substitué par $—SO_3H$ ou un reste cycloalkyle, à la condition que $R_1$ ou $R_2$ contienne un groupe sulfo.

2. Composés monoazoïques selon la revendication 1, caractérisés par le fait que X est un atome d'hydrogène ou de brome et R, $R_1$ et $R_2$ ont les significations données dans la revendication 1.

3. Composés monoazoïques selon la revendication 2, caractérisés par le fait que $R_1$ est un reste

alkylène -($C_1$-$C_4$)- 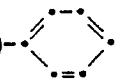

qui dans le reste phényle peut être substitué par un groupe sulfo, et $R_2$ est un reste alkyle en ($C_1$-$C_4$) qui peut être substitué par un groupe sulfo, ou un reste cycloalkyle et où le reste $R_1$ ou bien le reste $R_2$ contient un groupe sulfo, et R et X ont les significations données dans la revendication 2.

4. Composés monoazoïques selon la revendication 2, caractérisés par le fait que $R_1$ est un reste alkyle en ($C_1$-$C_8$) ou cycloalkyle, et $R_2$ est un reste sulfoalkyle en ($C_1$-$C_4$), et R et X ont les significations données dans la revendication 2.

5. Composés monoazoïques selon la revendication 3, caractérisés par le fait que R est un atome d'hydrogène, le reste méthyle ou éthyle, et $R_1$, $R_2$ et X ont les significations données dans la revendication 3.

6. Composés monoazoïques selon la revendication 1, caractérisés par le fait que le pont azoïque est lié en position para par rapport à un des deux restes CN.

7. Composés monoazoïques selon la revendication 5, caractérisés par le fait que

$R_1$ est un reste alkylène— 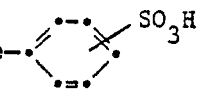

avec la partie alkylène en $C_1$-$C_2$ et $R_2$ est un reste alkyle en ($C_2$-$C_4$) ou cyclohexyle.

8. Composés monoazoïques selon la revendication 5, caractérisés par le fait que

$R_1$ est un reste alkylène- 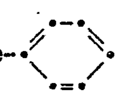

avec la partie alkylène en $C_1$-$C_2$, et $R_2$ est un reste sulfoalkyle avec alkyle en ($C_2$-$C_3$).

9. Composés monoazoïques selon la revendication 4, caractérisés par le fait que R est un atome d'hydrogène, un radical $-CH_3$ ou $-C_2H_5$ ; $R_1$ est un reste alkyle en $C_2$-$C_8$ ou cyclohexyle, et $R_2$ est un reste sulfoalkyle en $C_2$-$C_3$.

10. Composé monoazoïque selon la revendication 7 ayant la formule

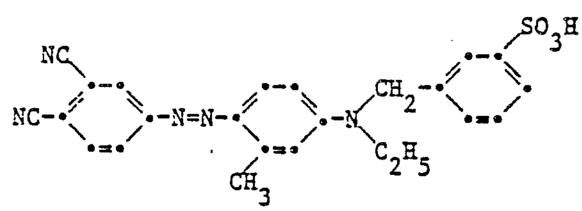

11. Composé monoazoïque selon la revendication 7 ayant la formule

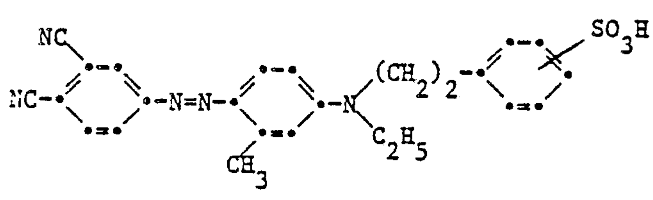

12. Composé monoazoïque selon la revendication 8, ayant la formule

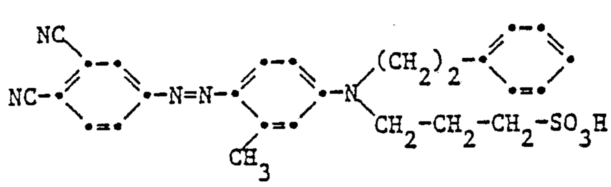

13. Procédé de préparation de composés monoazoïques de formule I selon la revendication 1, caractérisé par le fait qu'on diazote un composé de formule II

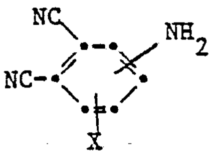 (II)

et qu'on copule avec un constituant de copulation de formule III

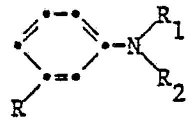 (III),

formules II et III dans lesquelles les symboles X, R, $R_1$ et $R_2$ ont les significations données sous la formule I, le composé de départ III étant choisi de façon à ce que l'un des restes $R_1$ ou $R_2$ contienne un groupe sulfo.

14. Procédé selon la revendication 13, caractérisé par le fait qu'on diazote un composé de formule II dans lequel X est un atome d'hydrogène ou de brome, et qu'on copule sur un constituant de copulation de formule III dans lequel R, $R_1$ et $R_2$ ont les significations données dans la revendication 13.

15. Procédé selon la revendication 14, caractérisé par le fait qu'on utilise un constituant de copulation de formule III, dans lequel

$R_1$ est un reste alkylène-($C_1$-$C_4$)- 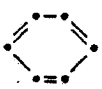

qui dans le reste phényle peut être substitué par un groupe sulfo, et $R_2$ est un reste alkyle en ($C_1$-$C_4$) qui peut être substitué par un groupe sulfo ou un reste cycloalkyle, et dans lequel le reste $R_1$ ou le reste $R_2$ contient un groupe sulfo, et R a la signification donnée dans la revendication 14.

16. Procédé selon la revendication 14, caractérisé par le fait qu'on utilise un constituant de copulation de formule III dans lequel $R_1$ est un reste alkyle en ($C_1$-$C_8$) ou cycloalkyle, et $R_2$ est un reste sulfoalkyle en ($C_1$-$C_4$), et R a la signification donnée dans la revendication 14.

17. Procédé selon la revendication 15, caractérisé par le fait qu'on utilise un constituant de copulation de formule III, dans lequel R est un atome d'hydrogène, le reste méthyle ou éthyle, et $R_1$ et $R_2$ ont les significations données dans la revendication 15.

18. Procédé selon la revendication 13, caractérisé par le fait qu'on utilise une amine de formule II, dans laquelle la fonction amine se trouve en position para par rapport à l'un des deux restes cyano.

19. Procédé selon la revendication 17, caractérisé par le fait qu'on utilise un constituant de copulation de formule III dans lequel

$R_1$ est un reste alkylène- 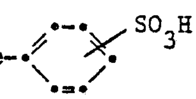

avec la partie alkylène en $C_1$-$C_2$, et $R_2$ est un reste alkyle en $C_2$-$C_4$ ou cyclohexyle.

20. Procédé selon la revendication 17, caractérisé par le fait qu'on utilise un constituant de copulation de formule III, dans lequel

$R_1$ est un reste alkylène- 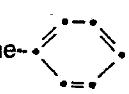

avec la partie alkylène en $C_1$-$C_2$, et $R_2$ est un reste sulfoalkyle avec la partie alkyle en ($C_2$-$C_3$).

21. Procédé selon la revendication 16, caractérisé par le fait qu'on utilise un constituant de copulation de formule III, dans lequel R est un atome d'hydrogène, le reste méthyle ou éthyle ; $R_1$ est un reste alkyle en ($C_2$-$C_8$) ou cyclohexyle, et $R_2$ est un reste sulfoalkyle en ($C_2$-$C_3$).

22. Procédé selon la revendication 14, caractérisé par le fait qu'on diazote la 3,4-dicyanoaniline et qu'on la copule sur la N-éthyl-N-(3'-sulfobenzyl)-3-méthylaniline, la N-éthyl-N-sulfophénéthyl-3-méthylaniline ou la N-γ-sulfopropyl-N-phénéthyl-3-méthylaniline.

23. Utilisation des composés monoazoïques selon les revendications 1 à 12 ou les composés monoazoïques obtenus selon les revendications 13 à 22 comme colorants acides pour teindre et imprimer des matières textiles naturelles et synthétiques.

24. Utilisation selon la revendication 23 pour teindre et imprimer des matières en polyamide et en laine.

25. Les matières textiles naturelles et synthétiques teintes et imprimées à l'aide des composés monoazoïques de formule I selon la revendication 1.